# EUROPEAN PATENT SPECIFICATION

(11) **EP 2 704 616 B1**
(45) Date of publication and mention of the grant of the patent: **08.07.2015**
(21) Application number: 12730628.0
(22) Date of filing: 07.05.2012
(51) Int. Cl.: A47J 37/06, F24C 7/06, F24C 15/16

(54) **BUILT-IN GRILL**
INTEGRIERTER GRILL
GRILL INTÉGRÉ

(30) Priority: 05.05.2011 IT TV20110058
(43) Date of publication of application: 12.03.2014
(73) Proprietor: Civiero, Luca, 31037 Loria (IT)
(72) Inventor: Civiero, Luca, 31037 Loria (IT)
(74) Representative: Zamprogno, Bruno
(86) International application number: PCT/IB2012/052252
(87) International publication number: WO 2012/150579

(56) References cited:
- EP-A2- 0 610 588
- EP-A2- 1 717 519
- DE-A1- 19 544 908
- DE-B3-102005 050 085
- DE-C2- 4 345 423
- FR-A1- 2 820 194
- GB-A- 2 415 888
- US-A- 3 281 575

## Description

### TECHNICAL FIELD

The present invention relates to a built-in grill.

### BACKGROUND ART

As known, grills are cooking appliances that are typically used during a "barbeque" (BBQ) for cooking food, typically meat or vegetables, in a so-called "grilled" manner, by way of a suitably heated cooking plate.

The peculiarity of a grill is to allow a cook to vary/alternate, during the cooking step, the contact/support surfaces of the food on the heated cooking plate so as to obtain a uniform and complete "grilling" of the food itself, on the entire outer surface, on the basis of the degree of cooking required.

The result of "grilled" cooking by way of a grill also depends on manual repositioning operations of the food on the cooking plate enacted by the cook, who must be able to have easy access to the grill cooking plate.

The currently known grills, having been designed for cooking "outdoors", i.e. in unclosed external areas, have a structure that appears to be devoid of devices for collecting and conveying cooking fumes/odours and therefore are unsuitable to be used in interior domestic spaces, for example in a kitchen.

It is also known that the use of traditional domestic ovens for performing "grilled" cooking similar to those obtainable by way of a grill is presently of difficult implementation. The domestic ovens have in fact a cooking compartment arranged within a frame, and a oven-door, which is hinged on the frame and is adapted to hermetically close the external opening of the compartment so as to ensure the maintenance of a high cooking temperature predetermined inside the compartment during the cooking of food.

The performance of grilled cooking by way of a domestic oven of the type described above appears to be hardly practicable, since the domestic oven structure makes food repositioning operations by the cook on the cooking plate particularly complex, who must time by time open/close the oven door causing the release of fumes/odour and determining unwanted variations/changes in food cooking temperature, with negative consequences on the final outcome of the cooking.

EP0610588 A2 discloses a traditional domestic type electric oven, which is provided with a hotplate movable between a first operative position wherein the plate is arranged immediately facing the upper surface of the cooking compartment so as to remain parallel to itself, and a second operating position, wherein the plate is inclined downwards, i.e. towards the lower surface of the cooking compartment so as to allow the user to carry out the cleaning of the upper surface.

EP1717519 A2 discloses a domestic oven wherein the resting grill for food corresponds to the heating plate.

DE4345423 describes a traditional domestic oven provided with a box-shaped element having an opening on which is adapted to be inserted a removable insert for the exhaust of fumes.

The domestic ovens described in the documents cited above are unsuitable for performing "grilled"/ barbeque cooking in interior domestic spaces as during the operation of food repositioning, necessary for "grilled" cooking, there is an uncontrolled release of fumes and odours towards the domestic space with all the disadvantages that this entails.

### DISCLOSURE OF INVENTION.

The purpose of the present invention is therefore to create a built-in barbeque-grill, being structured so that it can be built into a cabinet or a wall and that, unlike a traditional oven, allows a cook to easily perform food repositioning operations on the cooking plate without causing neither food cooking temperature alterations, nor generation of fumes/odours towards the domestic environment.

In accordance with these objectives, a built-in barbeque-grill is provided as defined in claim 1 and, preferably but not necessarily, in any of the dependent claims.

### BRIEF DESCRIPTION OF THE DRAWINGS

The present invention will now be described with reference to the accompanying drawings, which illustrate an example of a non-limiting embodiment, wherein:
- Figures 1 and 2 are schematic views in side elevation with parts in section and parts removed for clarity of the built-in grill made in accordance with the teachings of the present invention;
- Figure 3 is a schematic view in front elevation of the built-in grill shown in Figures 1 and 2;
- Figure 4 is a section of the built-in grill shown in Figure 3 along the line I-I shown in Figure 3;
- Figures 5 and 6 are schematic views in side elevation with parts in section and parts removed for clarity of a variant of the built-in grill in accordance with the teachings of the present invention;
- Figure 7 is a schematic front elevation view of the built-in grill shown in Figures 5 and 6;
- Figure 8 is a section of the built-in grill shown in Figure 7 along the line II-II shown in Figure 7; while
- Figures 9 and 10 show schematic views of a variant of the built-in grill shown in Figures 1-8.

### BEST MODE FOR CARRYING OUT THE INVENTION

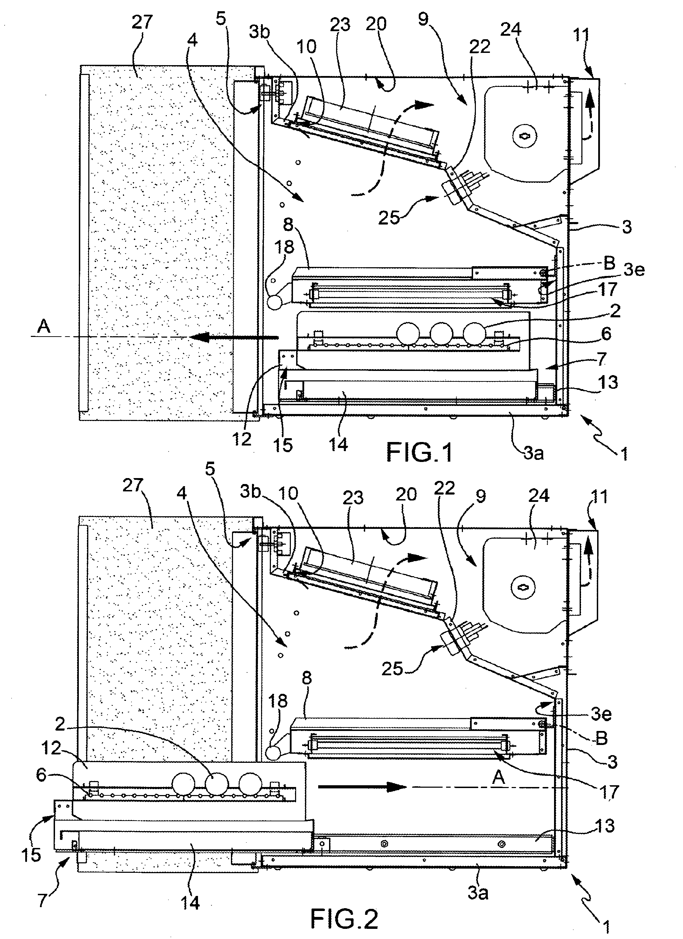

With reference to Figures 1 and 2 with the number 1 is shown as a whole a built-in barbeque-grill, which is structured to be built in a cabinet or in a wall (not shown) and is adapted to perform the grilled cooking of food 2.

The built-in grill 1 essentially comprises a boxed frame 3 of, preferably but not necessarily a parallelepiped shape, which is structured to be able to be built-in within a seat formed in a cabinet or a wall (not shown); a cooking compartment 4, which is arranged within the boxed frame 3 and has an access opening 5 formed on a side wall of the boxed frame 3 itself designed to be arranged in view when the grill 1 is built-in; at least one resting plate or grill 6 for food 2, which is arranged at the lower wall 3a of the frame 3 which delimits the lower cooking compartment 4 and is coupled to a support structure 7, which is adapted to slide on the lower wall 3a along an axis A, preferably but not necessarily horizontally, between a retracted position, wherein the grill 6 is arranged within the cooking compartment 4 (shown in Figure 1) and an extracted position wherein the grill 6 is arranged outside the cooking compartment 4 itself.

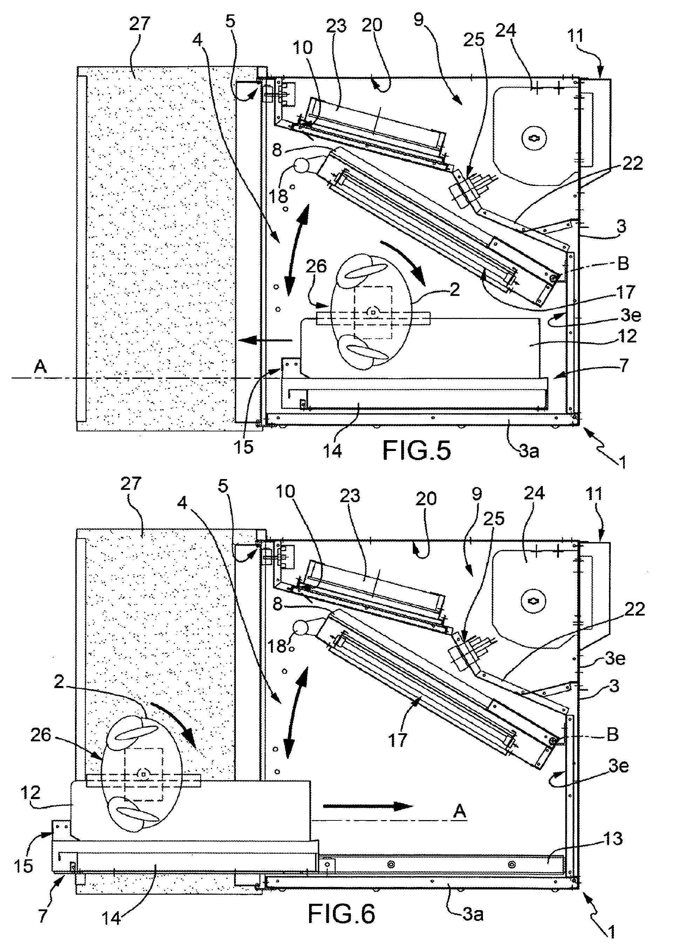

The built-in grill 1 also comprises a hotplate 8, which is arranged within the cooking compartment 4 immediately above the grill 6 (when the support structure 7 is in the retracted position), and is mechanically connected to the boxed frame 3 so that it can be manually moved to and from the grill 6 below, between a lowered position, wherein the hotplate 8 is positioned with its lower surface or heating side at a predetermined minimum distance from the grill 6 (shown in Figure 1), wherein the heating side is facing and adjacent to the upper surface of the grill 6, and a lifted position (shown in Figure 5), wherein the hotplate 8 is positioned with its lower surface or heating side at a predetermined maximum distance from the grill 6.

With reference to Figures 1 and 2, the built-in grill 1 also comprises an exhaust fan apparatus 9, which is arranged within the boxed frame 3 and is structured so as to suck up odours/fumes generated by the food 2, during its cooking, via a through opening 10 preferably, but not necessarily formed, on an upper wall 3b of the boxed frame 3 which bounds the cooking compartment 4 above the hotplate 8 to convey them towards an odour/fume exhaust opening 11 formed on a wall of the boxed frame 3 and structured to be connected to an odour/fume exhaust duct (not shown).

With reference to a preferred embodiment shown in Figure 1 and 2, the support structure 7 comprises a mobile drawer 12, which is sliding mounted on guides 13 stably fixed on the lower wall 3a, so as to be displaced between the extended position (shown in Figure 1) and the retracted position (shown in Figure 2), and is structured to support the grill 6 in a preferably horizontal position immediately facing the hotplate 8; and at least one collection tray 14, for example a grease drip pan, which is fixed in a stable but easily removable way to the casing of the drawer 12 below the grill 6; and preferably, but not necessarily, a handle 15 stably fixed on the outer side of the drawer 12 and structured to be able to be gripped by a user during the extraction or insertion of the drawer 12 from/into the cooking compartment 4. In particular, in the embodiment shown in Figure 1 and 2, the grill 1 comprises two removable collection trays 14, which are arranged coplanar with each other side by side to one another below the grill 6, while the mobile drawer 12 can be structured so as to present internally side portions for supporting the grill 6, which are adapted to support the grill 6 at different heights with respect to the bottom surface of the mobile drawer 12.

With regard to the hotplate 8, the latter in the example shown in Figure 1 is mechanically connected to the boxed frame 3 so as to be rotatable about an axis B perpendicular to the axis A between the lowered position (shown in Figure 1) and the lifted one (shown in Figure 5) and/or between a plurality of intermediate angular positions.

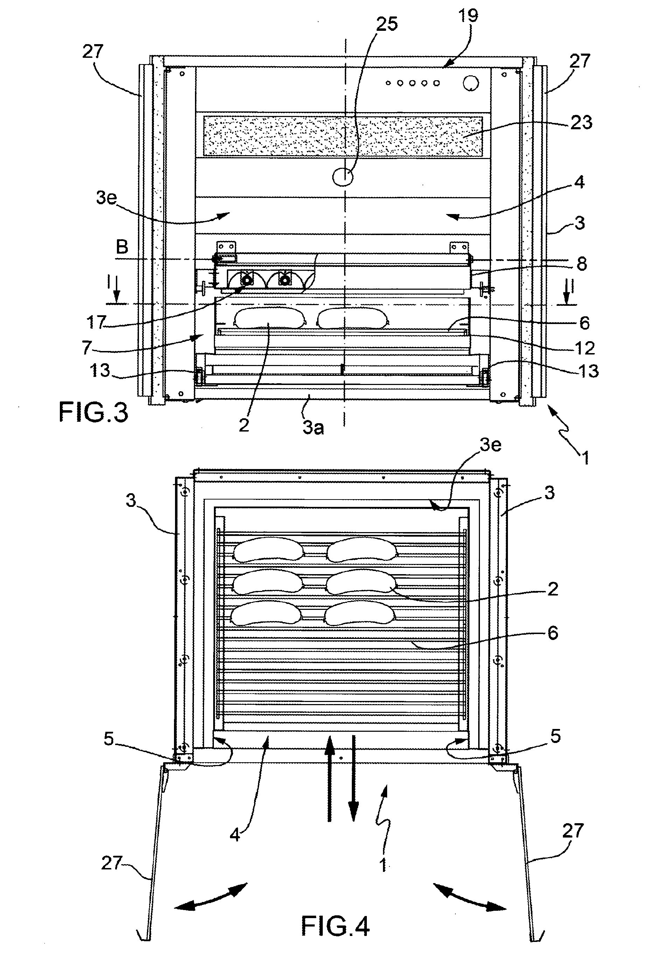

According to the preferred embodiment shown in Figures 1-4, the hotplate 8 is hinged to the side wall 3e of the boxed frame 3 opposite to the access opening 5, by way of fixing elements provided with hinge means of a known type, and is provided with an electrical heating device 17 adapted to generate the cooking heat for food 2.

On opposite side flanks of the hotplate 8 there are a pair of spring pins 18 which during rotation of the hotplate 8 about the axis B are adapted to be manually engaged by the user within holes formed on the interior side walls of the cooking compartment 4 so as to temporarily block the hotplate 8 at a predetermined height with respect to the grill 6.

According to the preferred embodiment shown in Figures 1-4, the hotplate 8 comprises a sheet of metallic material, while, the electrical heating device 17 may comprise one or more infrared devices (IR) such as infrared heat lamps or similar, which electric power is regulated by known electrical/electronic control means (not shown) on the basis of temperature settings and/or cooking programs to the grill selected by the user by way of a user control interface 19 present in the built-in grill 1.

In particular, according to a possible embodiment, each heating lamp 17 comprises an infrared radiator provided with a thermal conductor provided with an electric resistor which is recessed within a quartz or ceramic material and is fixed on the lower face of the metal plate; and a reflecting device, for example, a parabolic reflector, which is interposed between the thermal conductor and the lower face of the metal plate so as to advantageously reflect downwards the radiation emitted from the conductor itself.

From the above disclosure it should be specified that the plate of the hotplate is adapted, in use, to perform the function of "food warming". In fact, a part of the heat generated by the heat lamp 17 during the cooking cycle is advantageously transmitted to the upper plate which leads to an intermediate temperature lower than the cooking temperature. Therefore, in use, it is possible to advantageously lower the hotplate 8 so as to arrange it in a horizontal position, and place food products resting on the upper surface of the sheet, that by transmitting a limited amount of heat to the food keeps it "warmed" without however, causing additional cooking.

In an alternative embodiment (not shown), the hotplate 8 is connected to the walls of the boxed frame 3 through an articulated quadrilateral mechanical structure (not shown) or a known similar mechanism, so as to move within the cooking compartment 4 between the positions lifted/lowered remaining constantly parallel to a plane which is preferably but not necessarily horizontal, for example parallel to the lower wall 3a.

In an alternative embodiment (not shown), the hotplate 8 is arranged within the cooking compartment 4 in a stable manner, but easily removable, so as to be removable from the cooking compartment 4 itself to allow a user to conveniently clean/replace the same, and/or be placed in the cooking compartment 4 above the resting grill for food 6 in a position facing the upper surface of the grill 6 itself.

Regarding the exhaust fan apparatus 9, it comprises an extraction chamber 20 arranged within the boxed frame 3 separated from the cooking compartment 4 through a partitioning 22 corresponding to the upper wall 3b of the cooking compartment 4 itself, on which the opening 10 is obtained; a grease filtering device 23 comprising, for example, a metallic filter and/or an active carbon filter arranged both in the opening 10; and an suction unit 24 arranged within the extraction chamber 20 between the opening 10 and the odour/fume exhaust opening 11 and comprising, for example, an suction fan (not shown) driven in rotation by an electric motor (not shown) driven by the electronic control means.

According to the preferred embodiment shown in Figures 1 and 2, on the partitioning 22 a lighting device 25 is further arranged comprising for example an incandescent lamp or a LED lamp, or any similar lamp, which is configured to illuminate the space inside the cooking compartment 4 and is on/off controlled by a user through the user control interface 19.

According to a possible embodiment not shown, the built-in grill 1 may comprise electromechanical moving elements (not shown), which are structured to cooperate with the support structure 7 so as to move, on command, the drawer 12 between the retracted position and the extracted position. For this purpose, the electromechanical components may comprise for example electric actuators or an electric motor connected to the drawer 12 by way of a mechanical system for transmitting motion (not illustrated). The electronic control means can be configured so as to drive the electromechanical means to control the motion of the drawer 12 on the basis of a command imparted by the user by way of the user control interface 19.

According to a possible embodiment not shown, the built-in grill 1 may comprise electromechanical moving means (not shown) which are structured to cooperate with the hotplate 8 so as to move, on command, the same between the lifted position and the lowered position. For this purpose, the electromechanical moving means may comprise, for example, electric actuators or an electric motor connected to the hotplate 8 by way of a mechanical system for transmitting motion (not shown). The electronic control means may for example comprise an electronic control unit or an electronic circuit and being configured so as to drive the electromechanical devices for controlling the motion of the hotplate 8 on the basis of a command imparted by the user by way of the user control interface 19 and/or on the basis of the extracted/retracted position taken from the drawer 12 and/or on the basis of the cooking/temperature program selected by the user.

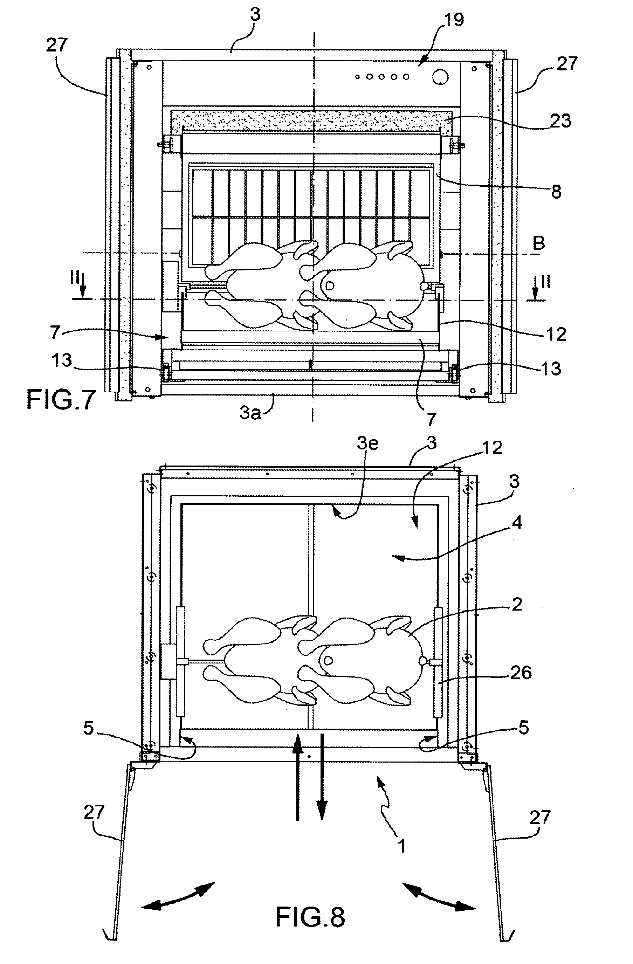

According to a possible embodiment shown in Figures 5, 6, 7, and 8, the built-in grill 1 comprises an electrically operated, rotisserie apparatus 26 which is fixed in a stable and preferably, but not necessarily, removable way on the upper part of the casing of the drawer 12, and is structured so as to be arranged, when the drawer 12 is in the retracted position, in a position facing the hotplate 8, when the latter is arranged, in turn, in the lifted position.

In the preferred embodiment shown in Figures 1-8, the built-in barbeque-grill 1 comprises a pair of doors 27 with swing closing, which are hinged on the vertical flanks of the boxed frame 3 from opposite sides with respect to the access opening 5 to rotate about respective axes, preferably vertical, so as to be arranged, independently from each other, in closed positions of the respective half of the area of the access opening 5 to the cooking compartment 4.

The doors 27 are structured so as to have between them, in the closed position, a slot or opening, delimited by the adjacent sides of the doors 27 themselves, which allows outside air with respect to the grill 1 to flow freely from the outside towards the interior of the cooking compartment 4.

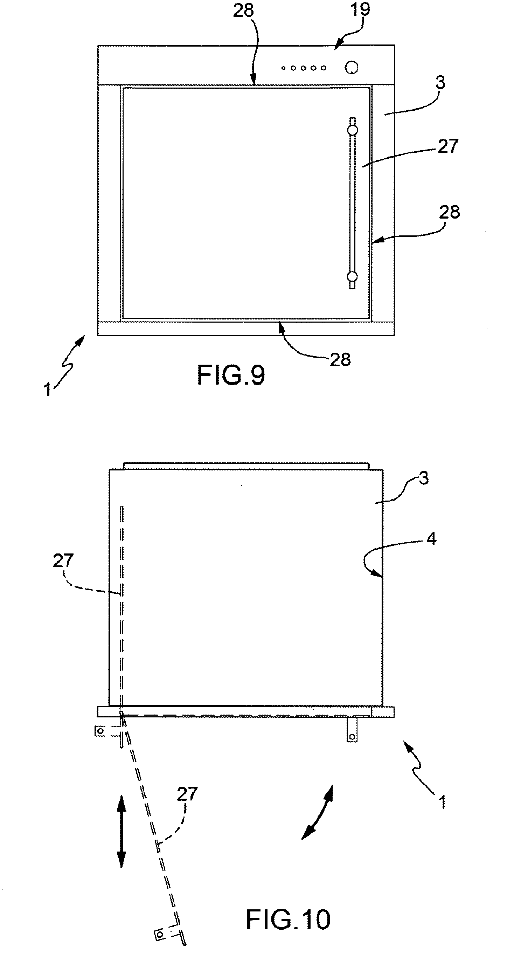

In an alternative embodiment shown in Figures 9 and 10, the built-in grill 1 comprises a single door 27 hinged to one of the vertical or horizontal flanks of the boxed frame 2, which surrounds the access opening 5 and is structured so as to not seal the same. In particular, according to the variant shown in Figures 9 and 10, the door 27 is structured so as to delimit together with the lateral flanks of the frame 3 surrounding the access opening 5, one or more slots 28 that allow external air with respect to the grill 1 to flow freely from the outside of the grill 1 towards the inside of the cooking compartment 4.

With reference to Figure 10, the door 27 can also be coupled to the boxed frame 3 by way of a known mechanical system, which allows the door 27 as a result of its opening to be inserted inside the compartment or of a seat (not shown) formed in the boxed frame 3 laterally to the opening 5, in a so-called "rollaway" position.

The operation of the built-in grill 1 described above is easily deducible from the foregoing description with no further explanation required.

The advantages deriving from the present invention are evident.

The positioning of the hotplate above the grill allows to obtain, on one hand, optimal cooking, i.e. without burning of meat as the cooking temperature remains substantially constant, and, secondly, a limited generation of smoke by grease content in the meat itself. In fact, the heat emitted from the top by the upper hotplate invests the meat by determining the melting of grease, which is deposited directly on the collection tray below without coming into contact with the heating plate, thereby limiting the generation of traditionally strong fumes generated by the grease itself in contact with the heated plates.

Moreover, thanks to the structure described above and to the setting of the air exhausted fan apparatus within the boxed frame, the barbeque grill can be advantageously built in a cabinet so as to be also used in closed domestic environments.

In particular, the driving of the exhaust fan apparatus 9 determines a constant and continuous release of outside fresh/clean air in the cooking compartment through the slots/opening, and at the same time the constant/continuous extraction/filtration of air/fumes/odours generated in the cooking compartment advantageously preventing their dispersion towards the interior domestic space.

Furthermore, the continuous injection of outside fresh/clean air (free of fumes) within the cooking compartment obtained from extraction, generates ventilation within the cooking compartment that advantageously keeps the internal temperature of the latter at a value lower than a predetermined temperature threshold, typically 40° C. The exceeding of the predetermined temperature threshold would in fact cause a critical condition of operation of the exhaust fan apparatus 9, and/or the electric motor, and/or the grease filter 23 which obviously would be damaged.

It should also be noted that, if on the one hand, the flow of forced air from the extraction apparatus within the cooking compartment ensures a low temperature inside the compartment, on the other, the cooking temperature of the food remains high and constant as the hotplate is in a position facing and immediately adjacent to the upper surface of the resting grill for food 6.

In addition, the ability to extract and retract the support movable drawer of the grill to and from the cooking compartment, allows the cook to perform with great ease, during the grill, the food repositioning operations on the cooking plate without causing leakage of fumes/odours towards the outside.

Finally it is clear that the built-in grill described above can be modified and varied without departing from the scope of the present invention defined by the appended claims.

## Claims

1. A built-in barbeque-grill (1) **characterized by** comprising:
- a boxed frame (3) which can be built in;
- a cooking compartment (4), which is arranged within the boxed frame (3) and has an access opening (5), obtained on a side wall of the boxed frame (3); - a hotplate (8), which is arranged within the cooking compartment (4) so as to be positioned above the food resting grill (6); **characterized in that** it is structured in such a way that, during the cooking of food, the interior space of the cooking compartment (4) always remains in communication with the external space to ensure that the air outside the cooking compartment (4) can flow freely within the cooking compartment (4); the built-in barbeque-grill (1) further comprising:
- a food resting grill (6) fixed to a support structure (7), which is adapted to slide within the cooking compartment (4) along a first axis (A) between a retracted position, wherein the food resting grill (6) is arranged within the cooking compartment (4), and an extracted position, wherein the food resting grill (6) is arranged outside the cooking compartment (4) itself; and
- a exhaust fan apparatus (9), which is arranged within the boxed frame (3) and is structured to extract and filter the fumes generated in the cooking compartment (4) from the food laid upon the food resting grill (6) to convey them towards an odour/fume exhaust opening (11) formed on a wall of the boxed frame (3) itself.

2. The built-in barbeque-grill according to claim 1, wherein said support structure (7) comprises a mobile drawer (12), which is slidingly mounted on guides (13) stably fixed on a wall (3a) of the boxed frame (3) within the cooking compartment (4), so as to be displaced between the extended position and the retracted position.

3. The built-in barbeque-grill according to claim 2, wherein said mobile drawer (12) is structured to support the food resting grill (6) so that when the support structure (7) is in the retracted position, the food resting grill (6) is facing said hotplate (8).

4. The built-in barbeque-grill according to any of the preceding claims, wherein the hotplate (8) is mechanically connected to the boxed frame (3) so as to be manually moved from and towards the grill (6), between a lowered position, wherein the hotplate (8) is arranged with its heating surface at a predetermined minimum distance from the food resting grill (6) in a position immediately facing/adjacent to the upper surface of the food resting grill (6) itself, and a lifted position, wherein the hotplate (8) is positioned with its heating surface at a maximum predetermined distance from the food resting grill (6) itself.

5. The built-in barbeque-grill according to any of the preceding claims, wherein said hotplate (8) is mechanically connected to said boxed frame (3) so as to be rotatable about a second axis (B) orthogonal to the first axis (A) between the lowered and lifted positions and/or between a plurality of intermediate angular positions.

6. The built-in barbeque-grill according to any of claims 1 to 4, wherein said hotplate (8) is connected to the boxed frame (3) so as to move within the cooking compartment (4) between the lifted/lowered positions remaining constantly parallel to a lying plane parallel to said first (A) and second axis (B).

7. The built-in barbeque-grill according to any of the preceding claims, comprising a user control interface (19) configured to allow a user to select temperature and/or grilling cooking programs; and wherein said hotplate (8) comprises infrared means (17) controlled by electric/electronic control means on the basis of temperature settings and/or grilling cooking programs selected by the user through said user control interface (19).

8. A barbeque-grill according to any of the preceding claims, wherein said exhaust fan apparatus (9) is structured to cause fumes extraction to determine in said cooking compartment (4) the circulation of an air flow coming from the outside of said cooking compartment (4) so as to cause an internal ventilation in the cooking compartment (4) so as to maintain, during cooking, the temperature of the cooking compartment (4) below a predetermined critical threshold temperature.

9. The barbeque-grill according to any of the preceding claims, wherein said exhaust fan apparatus (9) comprises an extraction chamber (20) arranged within the boxed frame (3) and separated from the cooking compartment (4) through a partitioning (22) on which a suction opening (10) is obtained; at least one filtering device (23) arranged in the suction opening (10) to filter the fumes produced by the food in the cooking compartment (4); an odour/fume exhaust opening (11) obtained on a wall of the frame (3) to convey the extracted fumes towards a duct external to the grill; and an extraction unit (24) arranged within the extraction chamber (20) to extract the fumes from the cooking compartment (4), through the suction opening (10), and convey them towards the outside of the grill through the odour/fume exhaust opening (11).

10. The barbeque-grill according to any of the preceding claims, comprising electromechanical moving means of said mobile drawer (12) between said retracted position and said extracted position; and electronic control means of said electromechanical moving means to control the motion of said mobile drawer (12) on the basis of user settings/selections/controls performed by the user through said control means (19).

11. The barbeque-grill according to any of the preceding claims, comprising electromechanical moving means of said hotplate (8) between said lowered position and said lifted position and/or an intermediate position, and electronic control means of said electromechanical moving means to control the motion of said hotplate (8) on the basis of user settings/selections/controls performed by the user through said control means (19).

12. The barbeque-grill according to any of the preceding claims, wherein said hotplate (8) is arranged within the cooking compartment (4) in a stable manner, but easily removable, so as to be extracted from the cooking compartment (4) itself.

13. The barbeque-grill according to any of the preceding claims, wherein the hotplate (8) comprises an electrical heating device (17) and at least one sheet of metallic material.

14. The barbeque-grill according to claim 13, wherein said electrical heating device (17) comprises an infrared radiator comprising, in turn, a thermal conductor provided with an electric resistor, which is fixed on the lower face of said metal sheet; and a reflecting device interposed between the thermal conductor and the lower face of said sheet of metallic material so as to reflect advantageously downwards the radiation emitted from the conductor itself.

15. The barbeque-grill according to claim 14, wherein said sheet of the hotplate (8) is adapted to perform the function of a food warming plate.

## Patentansprüche

1. Einbaugrill (1) **gekennzeichnet durch**:
- einen Kastenrahmen (3), der eingebaut werden kann;
- eine Garkammer (4), welche innerhalb des Kastenrahmens (3) angeordnet ist und eine Zugangsöffnung (5) aufweist, die an einer Seitenwand des Kastenrahmens (3) vorhanden ist;
- einer Wärmeplatte (8), die innerhalb der Garkammer (4) angeordnet ist, derart, dass sie über dem Speise aufnehmenden Grill (6) positioniert ist;
**dadurch** gekennzeichnet, dass diese derart konstruiert ist, dass der Innenraum der Garkammer (4) während des Garens der Speise immer in Kommunikation mit dem Außenraum bleibt, um sicherzustellen, dass die Luft außerhalb der Garkammer (4) frei in die Garkammer (4) strömen kann; wobei der Einbaugrill (1) ferner umfasst:
- einen Speise aufnehmenden Grill (6), der auf einer Stützstruktur (7) befestigt ist, welche so ausgebildet ist, dass diese innerhalb der Garkammer (4) entlang einer ersten Achse (A) zwischen einer zurückgezogenen Position, in welcher der Speise aufnehmende Grill (6) innerhalb der Garkammer (4) angeordnet ist, und einer herausgezogenen Position, in welcher der Speise aufnehmende Grill (6) außerhalb der Garkammer (4) angeordnet ist, verschoben werden kann; und
- eine Abluft-Gebläsevorrichtung (9), welche innerhalb des Kastenrahmens (3) angeordnet ist und so konstruiert ist, dass diese die in der Garkammer (4) von der auf dem Speise aufnehmenden Grill (6) liegenden Speise erzeugten Dünste abziehen und filtern kann, um diese zu einer Geruch/Dunst-Abluftöffnung (11) zu befördern, die in einer Wand des Kastenrahmens (3) ausgebildet ist.

2. Einbaugrill nach Anspruch 1, in welchem die Stützstruktur (7) eine bewegliche Zugeinrichtung (12) umfasst, welche gleitend auf Führungen (13) gelagert ist, die an einer Wand (3a) des Kastenrahmens (3) innerhalb der Garkammer (4) stabil fixiert sind, so dass diese zwischen der herausgezogen Position und der zurückgezogenen Position verschoben werden kann.

3. Einbaugrill nach Anspruch zwei, in welchem die mobile Zugeinrichtung (12) so konstruiert ist, dass diese den Speise aufnehmenden Grill (6) derart trägt, dass, wenn sich die Stützstruktur (7) in der zurückgezogenen Position befindet, der Speise aufnehmende Grill (6) der Wärmeplatte (8) zugewandt ist.

4. Einbaugrill nach einem der vorstehenden Ansprüche, in welchem die Wärmeplatte (8) mit dem Kastenrahmen (3) mechanisch verbunden ist, derart, dass diese zwischen einer abgesenkten Position, in welcher die Wärmeplatte (8) mit ihrer Heizfläche in einem vorbestimmten minimalen Abstand von dem Speise aufnehmenden Grill (6) in einer der Oberseite des Speise aufnehmenden Grills (6) unmittelbar zugewandten/benachbarten Position, und einer angehobenen Position, in welcher die Wärmeplatte (8) mit ihrer Heizfläche in einem maximalen vorbestimmten Abstand von dem Speise aufnehmenden Grill (6) positioniert ist, manuell vom Grill (6) weg und zu diesem hin bewegt werden kann,

5. Einbaugrill nach einem der vorstehenden Ansprüche, in welchem die Wärmeplatte (8) mit dem Kastenrahmen (3) mechanisch derart verbunden ist, dass diese zwischen der abgesenkten und der angehobenen Position und/oder zwischen einer Mehrzahl von dazwischen liegenden Winkelpositionen um eine zweite Achse (B) senkrecht zu der ersten Achse (A) drehbar ist.

6. Einbaugrill nach einem der Ansprüche 1 bis 4, in welchem die Wärmeplatte (8) mit dem Kastenrahmen (3) derart verbunden ist, dass sich diese innerhalb der Garkammer (4) zwischen der angehobenen/abgesenkten Position bewegt und dabei dauerhaft parallel zu einer liegenden Ebene parallel zur ersten (A) und zweiten Achse (B) bleibt.

7. Einbaugrill nach einem der vorstehenden Ansprüche, mit einer Benutzer-Steuerschnittstelle (19), die so konfiguriert ist, dass dem Benutzer erlaubt wird, eine Temperatur und/oder Grill-Gar- Programme zu wählen; und wobei die Wärmeplatte (8) eine Infraroteinrichtung (17) umfasst, die durch eine elektrische/elektronische Steuereinrichtung auf der Basis der vom Benutzer über die Benutzer-Steuerschnittstelle (19) ausgewählten Temperatureinstellungen und/oder Grill-Gar-Programme gesteuert wird.

8. Grill nach einem der vorstehenden Ansprüche, in welchem die Abluft-Gebläsevorrichtung (9) so konstruiert ist, dass ein Abzug von Dunst veranlasst wird, um in der Garkammer (4) die Zirkulation eines von außerhalb der Garkammer (4) kommenden Luftstroms zu bestimmen, um so während des Garens die Temperatur der Garkammer (4) unterhalb einer vorbestimmten kritischen Schwellentemperatur zu halten.

9. Grill nach einem der vorstehenden Ansprüche, in welchem die Abluft-Gebläsevorrichtung (9) umfasst eine Abzugskammer (20), die innerhalb des Kastenrahmens (3) angeordnet und von der Garkammer (4) durch einen Raumteiler (22) getrennt ist, in welchem eine Absaugöffnung (10) vorhanden ist; wobei wenigstens eine Filtereinrichtung (23) in der Absaugöffnung (10) angeordnet ist, um die von der Speise in der Garkammer (4) erzeugten Dünste zu filtern; eine Geruch/Dunst-Abluftöffnung (11), die in einer Wand des Rahmens (3) vorhanden ist, um die abgezogenen Dünste in Richtung eines Kanals außerhalb des Grills zu führen; und eine Abzugseinheit (24), die innerhalb der Abzugskammer (20) angeordnet ist, um die Dünste aus der Garkammer (4) durch die Absaugöffnung (10) abzuziehen und diese durch die Geruch/Dunst-Abluftöffnung (11) in Richtung der Außenseite des Grills zu führen.

10. Grill nach einem der vorstehenden Ansprüche, mit einer elektromechanischen Bewegungseinrichtung für die bewegliche Zugeinrichtung (12) zwischen der zurückgezogenen Position und der herausgezogen Position; und einer elektronischen Steuereinrichtung für die elektromechanische Bewegungseinrichtung, um die Bewegung der beweglichen Zugeinrichtung (12) auf der Basis der vom Benutzer über die Steuereinrichtung (19) eingegebenen Benutzereinstellungen/-auswählungen/-steuerungen zu steuern.

11. Grill nach einem der vorstehenden Ansprüche, mit einer elektromechanischen Bewegungseinrichtung für die Wärmeplatte (8) zwischen der abgesenkten Position und der angehobenen Position und/oder einer Zwischenposition, und einer elektronischen Steuereinrichtung für die elektromechanische Bewegungseinrichtung, um die Bewegung der Wärmeplatte (8) auf der Basis der durch den Benutzer über die Steuereinrichtung (19) eingegebenen Benutzereinstellungen/-auswählungen/-steuerungen zu steuern.

12. Grill nach einem der vorstehenden Ansprüche, in welchem die Wärmeplatte (8) innerhalb der Garkammer (4) in stabiler Weise aber leicht entnehmbar angeordnet ist, sodass diese aus der Garkammer (4) herausgezogen werden kann.

13. Grill nach einem der vorstehenden Ansprüche, in welchem die Wärmeplatte (8) eine elektrische Heizeinrichtung (17) und wenigstens eine Folie aus metallischem Material umfasst.

14. Grill nach Anspruch 13, in welchem die elektrische Heizeinrichtung (17) umfasst einen Infrarot-Radiator, der wiederum einen Wärmeleiter umfasst, der in einem elektrischen Widerstand vorgesehen ist, welcher auf der unteren Seite der Metallfolie befestigt ist; und eine Reflexionseinrichtung, die zwischen dem Wärmeleiter und der unteren Seite der Folie aus metallischem Material angeordnet ist, um so die von dem Leiter abgegebene Strahlung in vorteilhafter Weise nach unten zu reflektieren.

15. Grill nach Anspruch 14, in welchem die Folie der Wärmeplatte (8) so ausgebildet ist, dass diese die Funktion einer Speise-Warmhalteplatte erfüllt.

## Revendications

1. Barbecue encastré (1), **caractérisé en ce qu'**il comprend :
- un bâti-caisse (3) qui peut être encastré ;
- un compartiment de cuisson (4), qui est agencé à l'intérieur du bâti-caisse (3) et comporte une ouverture d'accès (5), obtenue sur une paroi latérale du bâti-caisse (3) ;
- une plaque chauffante (8), qui est agencée à l'intérieur du compartiment de cuisson (4) afin d'être positionnée au-dessus de la grille de soutien d'aliments (6) ;
**caractérisé en ce qu'**il est structuré de manière telle que, durant la cuisson d'aliments, l'espace intérieur du compartiment de cuisson (4) reste toujours en communication avec l'espace externe pour garantir que l'air à l'extérieur du compartiment de cuisson (4) peut s'écouler librement à l'intérieur du compartiment de cuisson (4) ; le barbecue encastré (1) comprenant en outre :
- une grille de soutien d'aliments (6) fixée à une structure de support (7), qui est adaptée pour coulisser à l'intérieur du compartiment de cuisson (4) le long d'un premier axe (A) entre une position rétractée, dans laquelle la grille de soutien d'aliments (6) est agencée à l'intérieur du compartiment de cuisson (4), et une position extraite, dans laquelle la grille de soutien d'aliments (6) est agencée à l'extérieur du compartiment de cuisson (4) lui-même ; et
- un appareil ventilateur d'évacuation (9), qui est agencé à l'intérieur du bâti-caisse (3) et est structuré pour extraire et filtrer les émanations générées dans le compartiment de cuisson (4) à partir des aliments posés sur la grille de soutien d'aliments (6) pour les transporter vers une ouverture d'évacuation d'odeurs/d'émanations (11) formée sur une paroi du bâti-caisse (3) lui-même.

2. Barbecue encastré selon la revendication 1, dans lequel ladite structure de support (7) comprend un tiroir mobile (12), qui est monté de façon coulissante sur des guidages (13), fixés de façon stable sur une paroi (3a) du bâti-caisse (3) à l'intérieur du compartiment de cuisson (4), afin d'être déplacé entre la position étendue et la position rétractée.

3. Barbecue encastré selon la revendication 2, dans lequel ledit tiroir mobile (12) est structuré pour supporter la grille de soutien d'aliments (6) pour que, lorsque la structure de support (7) est dans la position rétractée, la grille de soutien d'aliments (6) fasse face à ladite plaque chauffante (8).

4. Barbecue encastré selon une quelconque des revendications précédentes, dans lequel la plaque chauffante (8) est raccordée mécaniquement au bâti-caisse (3) afin d'être déplacée manuellement à partir de et vers la grille (6), entre une position abaissée, dans laquelle la plaque chauffante (8) est agencée avec sa surface chauffante à une distance minimum prédéterminée de la grille de soutien d'aliments (6) dans une position immédiatement opposée/adjacente à la surface supérieure de la grille de soutien d'aliments (6) elle-même, et une position élevée, dans laquelle la plaque chauffante (8) est positionnée avec sa surface chauffante à une distance prédéterminée maximum de la grille de soutien d'aliments (6) elle-même.

5. Barbecue encastré selon une quelconque des revendications précédentes, dans lequel ladite plaque chauffante (8) est raccordée mécaniquement audit bâti-caisse (3) afin d'être rotative autour d'un second axe (B) orthogonal au premier axe (A) entre les positions abaissée et élevée et/ou entre une pluralité de positions angulaire intermédiaires.

6. Barbecue encastré selon une quelconque des revendications 1 à 4, dans lequel ladite plaque chauffante (8) est raccordée au bâti-caisse (3) afin de se déplacer à l'intérieur du compartiment de cuisson (4) entre les positions élevée/abaissée en restant constamment parallèle à un plan de pose parallèle auxdits premier (A) et second (B) axes.

7. Barbecue encastré selon une quelconque des revendications précédentes, comprenant une interface de commande utilisateur (19) configurée pour permettre à un utilisateur de sélectionner une température et/ou des programmes de cuisson au gril ; et dans lequel ladite plaque chauffante (8) comprend des moyens infrarouges (17) commandés par des moyens de commande électriques/électroniques en fonction de réglages de température et/ou de programmes de cuisson au gril sélectionnés par l'utilisateur par l'intermédiaire de ladite interface de commande utilisateur (19).

8. Barbecue selon une quelconque des revendications précédentes, dans lequel ledit appareil ventilateur d'évacuation (9) est structuré pour entraîner l'extraction d'émanations pour déterminer, dans ledit compartiment de cuisson (4), la circulation d'un écoulement d'air provenant de l'extérieur dudit compartiment de cuisson (4) afin d'entraîner une ventilation interne dans le compartiment de cuisson (4) afin de maintenir, durant la cuisson, la température du compartiment de cuisson (4) en dessous d'une température de seuil critique prédéterminée.

9. Barbecue selon une quelconque des revendications précédentes, dans lequel ledit appareil ventilateur d'évacuation (9) comprend une chambre d'extraction (20) agencée à l'intérieur du bâti-caisse (3) et séparée du compartiment de cuisson (4) par l'intermédiaire d'une cloison (22) sur laquelle une ouverture d'aspiration (10) est obtenue ; au moins un dispositif filtrant (23) agencé dans l'ouverture d'aspiration (10) pour filtrer les émanations produites par les aliments dans le compartiment de cuisson (4) ; une ouverture d'évacuation d'odeurs/d'émanations (11) obtenue sur une paroi du bâti (3) pour transporter les émanations extraites vers une conduite extérieure à la grille ; et une unité d'extraction (24) agencée à l'intérieur de la chambre d'extraction (20) pour extraire les émanations à partir du compartiment de cuisson (4), à travers l'ouverture d'aspiration (10), et les transporter vers l'extérieur de la grille à travers l'ouverture d'évacuation d'odeurs/d'émanations (11).

10. Barbecue selon une quelconque des revendications précédentes, comprenant des moyens de mouvement électromécaniques dudit tiroir mobile (12) entre ladite position rétractée et ladite position extraite ; et des moyens de commande électroniques desdits moyens de mouvement électromécaniques pour commander le mouvement dudit tiroir mobile (12) en fonction de réglages/sélections/commandes utilisateur réalisés par l'utilisateur par l'intermédiaire desdits moyens de commande (19).

11. Barbecue selon une quelconque des revendications précédentes, comprenant des moyens de mouvement électromécaniques de ladite plaque chauffante (8) entre ladite position abaissée et ladite position élevée et/ou une position intermédiaire, et des moyens de commande électroniques desdits moyens de mouvement électromécaniques pour commander le mouvement de ladite plaque chauffante (8) en fonction de réglages/sélections/commandes utilisateur réalisés par l'utilisateur par l'intermédiaire desdits moyens de commande (19).

12. Barbecue selon une quelconque des revendications précédentes, dans lequel ladite plaque chauffante (8) est agencée à l'intérieur du compartiment de cuisson (4) de manière stable, mais facilement amovible, afin d'être extraite du compartiment de cuisson (4) lui-même.

13. Barbecue selon une quelconque des revendications précédentes, dans lequel la plaque chauffante (8) comprend un dispositif chauffant électrique (17) et au moins une feuille de matériau métallique.

14. Barbecue selon la revendication 13, dans lequel ledit dispositif chauffant électrique (17) comprend un radiateur infrarouge comprenant, à son tour, un conducteur thermique pourvu d'une résistance électrique, qui est fixée sur la face inférieure de ladite feuille métallique ; et un dispositif réfléchissant interposé entre le conducteur thermique et la face inférieure de ladite feuille de matériau métallique afin de réfléchir avantageusement vers le bas le rayonnement émis à partir du conducteur lui-même.

15. Barbecue selon la revendication 14, dans lequel ladite feuille de la plaque chauffante (8) est adaptée pour remplir la fonction d'une plaque de réchauffage d'aliments.
